(19)

**Europäisches Patentamt**
**European Patent Office**
**Office européen des brevets**

(11) **EP 4 621 692 A1**

(12) **EUROPEAN PATENT APPLICATION**

(43) Date of publication:
24.09.2025 Bulletin 2025/39

(21) Application number: 25164388.8

(22) Date of filing: 18.03.2025

(51) International Patent Classification (IPC):
*G06Q 30/0201* (2023.01)      *G06Q 40/06* (2012.01)
*H04L 9/00* (2022.01)

(52) Cooperative Patent Classification (CPC):
**H04L 9/50; G06Q 10/087; G06Q 30/0206;**
**G06Q 40/04; G06Q 40/06**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **21.03.2024 IN 202421021572**

(71) Applicant: **Tata Consultancy Services Limited**
**Maharashtra (IN)**

(72) Inventors:
• **MOHITE, Jayantrao**
**400601 Thane West, Maharashtra (IN)**
• **SINGH, Dineshkumar Jang Bahadur**
**400601 Thane West, Maharashtra (IN)**
• **SAWANT, Suryakant Ashok**
**411057 Pune, Maharashtra (IN)**
• **URKUDE, Rajesh**
**400601 Thane West, Maharashtra (IN)**
• **PAPPULA, Srinivasu**
**500034 Hyderabad, Telangana (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **SYSTEM AND METHOD FOR CREATING NON-FUNGIBLE TOKEN BASED DYNAMIC DECENTRALIZED NETWORK FOR WAREHOUSE COMMODITY MANAGEMENT**

(57)     Warehouse management is an important aspect in agricultural sector due to dynamism and vulnerability to multiple risks for crop yield storage and processing. Conventional centralized warehouse management possess limited accessibility to stakeholders. The present disclosure addresses the unresolved problem of the conventional approaches by providing a system and method for creating non-fungible token (NFT) based dynamic decentralized network for warehouse commodity management. NFTs are generated for warehouses where commodities are stored with a warehouse receipt (WHR) as security collateral. Generation of NFTs for warehouses helps to create a dynamic decentralized network for warehouse commodity management wherein various stakeholders can participate while satisfying relevant quality and regulatory compliance. Further, a dynamic collateral value is determined for the generated NFT of the warehouses and WHR based on sustainable cultivation, transport and storage. Furthermore, an optimal commodity selling schedule is generated based on commodity quality, risk and market demand in real time.

Receiving, a plurality of meta data associated with one or more warehouses pertaining to one or more entities, and a warehouse receipt created for one or more commodities that are stored in the one or more warehouses — 202

Generating, a non-fungible token (NFT) for (i) the one or more warehouses pertaining to the one or more entities using the plurality of meta data and (ii) the warehouse receipt created for each of the one or more commodities — 204

Validating, the non-fungible token (NFT) for (i) the one or more warehouses pertaining to the one or more entities using the plurality of meta data, and (ii) the warehouse receipt created for each of the one or more commodities using one or more non-invasive approaches — 206

Creating, a decentralized network for a warehouse commodity management using the validated NFT generated — 208

Estimating, a base value of the one or more commodities in the decentralized network for warehouse commodity management based on one or more parameters — 210

Determining, a dynamic collateral value of the one or more commodities in the decentralized network for warehouse commodity management using one or more predictive models, wherein the one or more predictive models determine the dynamic collateral value by dynamically updating the base value in accordance with one or more market related conditions, one or more anticipated losses, and a sustainable storage index — 212

Generating, an optimal commodity selling schedule based on one or more variables using the one or more predictive models and one or more optimization algorithms — 214

Enabling, a market-place transaction system for the non-fungible token (NFT) generated for (i) the one or more warehouses pertaining to the one or more entities using the plurality of meta data, and (ii) the warehouse receipt created for each of the one or more commodities based on the optimal commodity selling schedule — 216

200 **FIG. 2**

EP 4 621 692 A1

**Description**

CROSS-REFERENCE TO RELATED APPLICATIONS AND PRIORITY

The present application claims priority to Indian application no. 202421021572, filed on 21st March 2024.

TECHNICAL FIELD

The disclosure herein generally relates to the field of warehouse commodity management, and, more particularly, to system and method for creating non-fungible token based dynamic decentralized network for warehouse commodity management.

BACKGROUND

Agricultural sector is highly dynamic and vulnerable to various risks such as climate change, short-term weather fluctuations, supply-chain risks of input material and labour, as well as risks associated with volume of processed harvest across larger geography. Consequently, produce yielded after such a precarious production cycle holds immense value for farmers and other stakeholders alike. Even though farmers may encounter challenges such as market glut resulting in suboptimal prices for their produce, they still require funds to commence their next crop cycle. Warehouses offer a viable solution by enabling farmers and traders to store their products during the post-harvest season, when prices tend to be low. They can then stagger their supplies throughout the year, as and when prices stabilize. Warehouses also cater to financial needs of a storage personnel. Nationalized and commercial banks can extend credit to the tune of 75 to 80 percent of the value of stored products, against a warehouse receipt issued.

Existing systems face challenges with centralized warehouse management, limiting accessibility for various stakeholders. Warehouse receipts were traditionally issued only for commodities stored in approved warehouses, restricting the choices available to commodity owners. With existing systems, participation of diverse entities such as individual farmers and local organizations, is hindered in the warehouse ecosystem. Further, the centralized nature of the existing systems lead to a lack of transparent monitoring and involvement of relevant stakeholders. The absence of a trustworthy mechanism for monitoring warehouse conditions, sensory infrastructure, and overall warehouse status creates challenges in ensuring integrity of stored commodities. This limitation impacts trustworthiness and transparency of the warehouse management system.

SUMMARY

Embodiments of the present disclosure present technological improvements as solutions to one or more of the above-mentioned technical problems recognized by the inventors in conventional systems. For example, in one embodiment, a processor implemented method is provided. The processor implemented method, comprising receiving, via one or more hardware processors, a plurality of meta data associated with one or more warehouses pertaining to one or more entities, and a warehouse receipt created for one or more commodities that are stored in the one or more warehouses; generating, via the one or more hardware processors, a non-fungible token (NFT) for (i) the one or more warehouses pertaining to the one or more entities using the plurality of meta data and (ii) the warehouse receipt created for each of the one or more commodities; validating, via the one or more hardware processors, the non-fungible token (NFT) for (i) the one or more warehouses pertaining to the one or more entities using the plurality of meta data, and (ii) the warehouse receipt created for each of the one or more commodities using one or more non-invasive approaches; creating, via the one or more hardware processors, a decentralized network for a warehouse commodity management using the validated NFT generated; estimating, via the one or more hardware processors, a base value of the one or more commodities in the decentralized network for warehouse commodity management based on one or more parameters; determining, via the one or more hardware processors, a dynamic collateral value of the one or more commodities in the decentralized network for warehouse commodity management using one or more predictive models, wherein the one or more predictive models determine the dynamic collateral value by dynamically updating the base value in accordance with one or more market related conditions, one or more anticipated losses, and a sustainable storage index; generating, via the one or more hardware processors, an optimal commodity selling schedule based on one or more variables using the one or more predictive models and one or more optimization algorithms; and enabling, via the one or more hardware processors, a market-place transaction system for the non-fungible token (NFT) generated for (i) the one or more warehouses pertaining to the one or more entities using the plurality of meta data, and (ii) the warehouse receipt created for each of the one or more commodities based on the optimal commodity selling schedule.

**In** another aspect, a system is provided. The system comprising a memory storing instructions; one or more communication interfaces; and one or more hardware processors coupled to the memory via the one or more communication interfaces, wherein the one or more hardware processors are configured by the instructions to: receive a plurality of meta data associated with one or more warehouses pertaining to one or more entities, and a warehouse receipt created for one or more commodities that are stored in the one or more warehouses; generate a non-fungible token (NFT) for (i) the one or more warehouses pertaining to the one or more entities using the plurality of meta data and (ii) the warehouse receipt created for each of the one or more commodities; validate the non-fungible token (NFT) for (i) the one or more warehouses pertaining to the one or more entities using the plurality of meta data, and (ii) the warehouse receipt created for each of the one or more commodities using one or more non-invasive approaches; create a decentralized network for a warehouse commodity management using the validated NFT generated; estimate a base value of the one or more commodities in the decentralized network for warehouse commodity management based on one or more parameters; determine a dynamic collateral value of the one or more commodities in the decentralized network for warehouse commodity management using one or more predictive models, wherein the one or more predictive models determine the dynamic collateral value by dynamically updating the base value in accordance with one or more market related conditions, one or more anticipated losses, and a sustainable storage index; generate an optimal commodity selling schedule based on one or more real time variables using the one or more predictive models and one or more optimization algorithms; and enable a market-place transaction system for the non-fungible token (NFT) generated for (i) the one or more warehouses pertaining to the one or more entities using the plurality of meta data, and (ii) the warehouse receipt created for each of the one or more commodities based on the optimal commodity selling schedule.

**In** yet another aspect, a non-transitory computer readable medium is provided. The non-transitory computer readable medium are configured by instructions for receiving a plurality of meta data associated with one or more warehouses pertaining to one or more entities, and a warehouse receipt created for one or more commodities that are stored in the one or more warehouses; generating a non-fungible token (NFT) for (i) the one or more warehouses pertaining to the one or more entities using the plurality of meta data and (ii) the warehouse receipt created for each of the one or more commodities; validating the non-fungible token (NFT) for (i) the one or more warehouses pertaining to the one or more entities using the plurality of meta data, and (ii) the warehouse receipt created for each of the one or more commodities using one or more non-invasive approaches; creating a decentralized network for a warehouse commodity management using the validated NFT generated; estimating a base value of the one or more commodities in the decentralized network for warehouse commodity management based on one or more parameters; determining a dynamic collateral value of the one or more commodities in the decentralized network for warehouse commodity management using one or more predictive models, wherein the one or more predictive models determine the dynamic collateral value by dynamically updating the base value in accordance with one or more market related conditions, one or more anticipated losses, and a sustainable storage index; generating an optimal commodity selling schedule based on one or more variables using the one or more predictive models and one or more optimization algorithms; and enabling a market-place transaction system for the non-fungible token (NFT) generated for (i) the one or more warehouses pertaining to the one or more entities using the plurality of meta data, and (ii) the warehouse receipt created for each of the one or more commodities based on the optimal commodity selling schedule.

In accordance with an embodiment of the present disclosure, the one or more hardware processors are configured to determine a ranking for the one or more warehouse based on (i) a feedback received from the one or more entities, and (ii) a plurality of data related to continuous commodity and environmental monitoring obtained from the one or more warehouses.

**In** accordance with an embodiment of the present disclosure, the one or more parameters for estimating the base value of the one or more commodities comprise at least one of (i) information associated with an actual yield of the one or more commodities, (ii) grade of the one or more commodities, (iii) real time market price trends associated with the one or more commodities, (iv) the one or more anticipated losses, (v) a sustainable cultivation index, and (vi) a sustainable transport index.

In accordance with an embodiment of the present disclosure, the dynamic collateral value of the one or more commodities ensures resilience with evolving market dynamics and storage conditions.

In accordance with an embodiment of the present disclosure, the one or more real time variables for generating the optimal commodity selling schedule comprise at least one of (i) an anticipated market price trend associated with the one or more commodities, (ii) the one or more anticipated losses, (iii) information associated with temporal arrival of the one or more commodities into market, and (iv) one or more user preferences.

In accordance with an embodiment of the present disclosure, the optimal commodity selling schedule is dynamically updated.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for creating non-fungible token based dynamic decentralized network for warehouse commodity management, in accordance with some embodiments of the present disclosure.

FIG. 2 depicts an exemplary flow diagram illustrating a method for creating non-fungible token based dynamic decentralized network for warehouse commodity management, in accordance with some embodiments of the present disclosure.

FIG. 3 provides an overview of onboarding a warehouse as a non-fungible token (NFT) for creating non-fungible token based dynamic decentralized network for warehouse commodity management, in accordance with some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

The agricultural sector is highly dynamic and vulnerable to various risks such as climate change, short-term weather fluctuations, supply-chain risks of input material and labour, as well as risks associated with the volume of processed harvest across larger geography. Warehouses offer a viable solution by enabling farmers and traders to store their products during the post-harvest season, when prices tend to be low.

In order to develop and regulate warehouses and make provisions for negotiability of warehouse receipts, the government enacted the Warehousing (Development and Regulation) Act (WDRA), 2007. WDRA registers warehouses that are willing to issue negotiable warehouse receipts (NWRs). Warehouses meeting certain quality standards can issue NWRs, which carry a guarantee that the holder of the NWR will be delivered the quality and quantity mentioned in it. There are about 55,000 warehouses in the India out of which only 735, having a capacity of 6.6 million tonnes, have valid registration with WDRA. In unregistered warehouses, quality specifications are not standardized. A farmer or trader who keeps his produce in such warehouses is issued a warehouse receipt (WR) in physical form. He or she can take a pledge loan from a bank against this receipt but it is non-negotiable and he cannot transfer it to another person. The farmer/trader has no protection against the warehouse in case of deterioration in quality of produce or pilferage by the warehouse. The produce stored in such warehouses is generally managed by collateral management companies and they arrange pledge loans against such WRs. In 2018, the trade estimate in India was more than ₹ 40,000 crore is advanced as pledge loans against WRs issued by unregistered warehouses. However, hardly any pledge loans have been sanctioned in any of the eastern and north-eastern states, from Bihar to Tripura. Hence, the proposed system provides transparency to storage in such warehouses, especially unregistered unregulated warehouses. The registration of warehouses with WDRA is not compulsory and banks consider WRs issued by non-registered warehouses good enough for pledge loans through collateral managers. Banks do not give any concession on interest rates on loans against NWRs issued by WDRA registered warehouses. If the objective of e-NAM (National Agricultural Market) is to be achieved, the proposed solution can help the government to bring all warehouses in the gambit of this online NFT based warehouse, registering with WDRA and they issue only e-NWRs. The government can then also extend 2% subvention to medium and large farmers for pledge loans up to ₹ 5 lakh raised against e-NWRs, enabling the financial health to these beneficiaries.

Nationalized and commercial banks can extend credit to the tune of 75 to 80 percent of the value of stored products, against the warehouse receipt issued. Warehouse receipt (WHR) is a type of documentation that acts as a proof used in the futures markets. But before it can be used for trading as a futures contract, and available for transfer to a buyer, the participants must follow certain compliance criteria. Some of the compliance criteria are following:

a. WHR is issued only for a given or selected set of commodities, which is physically present in the warehouse, and has met specific, necessary quality standards requirements.

b. All and proper, documentation is available and has been verified by different concerned stakeholders.

c. Warehouse is in a secured location and is already approved by Commodity Exchange.

d. The warehouse also provides the inventory management services for the futures exchange and ensures that any commodities delivered to the warehouse meet the strict specifications, including having proper certifications. For example, copper and gold would each have their own specific weight and quality requirements that would need to be met before the warehouse could accept a shipment from a refiner or producer.

e. Commodity producers (CP) must be registered with appropriate authorities, have required license post the registration before they can write contracts on their commodity inventory.

f. Certificated Stock: Commodity producers must also certificate their physical inventory through a certification process which involves inspection and authentication. Certificated stock can then be used to write contracts on inventory in the futures market.

Availability of the credit against the WHR caters to needs of farmers by enabling them to avoid panic selling for immediate money needs or because of lack of proper storage facilities. It gives the farmer holding power and they can wait for the favourable market conditions and get a best value for the produce and simultaneously granting them access to credit to initiate next season's crop cycle. Moreover, the warehouse receipt can serve as a collateral security for commercial banks to provide credit, hence reducing their risks. However, there are various challenges which makes the WHR process tedious, complex and lengthy for the stakeholders. Some of the challenges include no accountability for qualitative and quantitative losses during storage, price destabilization and future valuation issues, traceability, transparency, trust, and efficiency issues, fraud, bias, and manipulation issues due to manual or paper based WHR. Currently the WHR process is done mostly manually and to some extent records are also being maintained in digital formats. However, there is no system or process for managing WHR which is transparent or trusted in terms of quality and authenticity. Due to these reasons WHRs are not being accepted in export markets and its use is limited in local markets.

Existing systems face challenges with centralized warehouse management, limiting accessibility for various stakeholders. Warehouse receipts are traditionally issued only for commodities stored in approved warehouses, restricting the choices available to commodity owners. The lack of a decentralized approach hinders participation of diverse entities, such as individual farmers and local organizations like farmer producer organization or company (FPO, FPC), in the warehouse ecosystem.

Loans provided against warehouse receipts are determined based on commodity values at the time of arrival, considering quality, quantity, and market rates. However, these valuations are not dynamically account for market fluctuations, sustainable practices, or anticipated losses due to warehouse, market, or commodity-related factors. The static approach to collateral valuation presents a gap in adapting to dynamic nature of agricultural markets, potentially leading to inaccurate loan assessments.

Existing systems lack mechanisms or methods to provide farmers with guidance on optimal commodity selling strategies. The absence of a system that dynamically advised on when and how much to sell, considering commodity quality, risk factors, and market demand, limited farmers' ability to optimize profits. Thus, a comprehensive decision support system is required to enhance profitability of commodity sales for farmers. Further, the existing systems do not sufficiently consider sustainability indices in the collateral valuation process. This oversight results in neglecting importance of environmentally conscious agricultural and logistical practices, which are increasingly critical in today's markets. Incorporating sustainability indices in the collateral valuation is essential for aligning with modern agricultural practices and addressing broader environmental concerns.

The present disclosure addresses the unresolved problem of the conventional approaches by providing a system and method for creating non-fungible token based dynamic decentralized network for warehouse commodity management. The key idea is to generate NFTs for warehouses and various Assets/Products stored in a warehouse linked with a warehouse receipt as security collateral. Creation of NFTs for warehouses helps to create decentralized mechanism wherein various stakeholders can participate while ensuring relevant quality and regulatory compliance is met. Moreover, NFTs of WHR allows for reliable and authentic ownership tracking, removal of frauds/biases as all the transaction will be visible to everybody on platform. Also, the present disclosure removes necessity for paper based WHR storage, filing, safeguarding, tracking used and unused and physically destroying unused WHRs, as well as costs of overnight delivery of warehouse receipts. In the present disclosure, purchasing, issuance, transfer, monitoring of warehouse receipts issued from all various geographical locations is centralized.

Currently Banks and NBFCs are providing collateral based on a value decided based on the commodity during arrival in warehouse. This does not cover possible losses or quality improvements which may happen during storage in warehouses. This may result in loss to either Bank (in terms of default of collateral) or to the farmers. The present disclosure provides a dynamic valuation approach which considers sustainable cultivation of crops, sustainable transport of produce to warehouse and sustainable storage inside the warehouse. Base price is calculated considering sustainable cultivation of crops, sustainable transport of produce. However, dynamic valuation considers sustainable storage inside the warehouse, qualitative and quantitative losses over a period. Further, the present disclosure provides a system and method for calculating the non-performing assets (NPAs) linked with various given WHRs associated with a producer or the trader and hence generating a dynamic credit rating score depending on the dues. Existing WHR are only issued for the commodities stored in authorized and approved warehouses. The present disclosure provides a decentralized network for warehouse commodity management using NFTs of warehouse receipt. Such a network enables equal opportunity for all the farmers and Farmer Producer Organization (FPOs) while ensuring relevant quality checks are met. It is observed that not all commodities can be stored for a period of 12 months or it's not always possible to sell the commodities after 12 months. The present disclosure determines when and how much to sell based on commodity quality over a period, market trend and forecast, sustainable storage indicators. Also, the present disclosure considers price dynamics of commodities, estimation of commodity quality and risk score. More specifically, the present disclosure describes the following:

1. A system and method for decentralized warehouse management using NFT of warehouse and warehouse receipt (WHR).
2. A system and method for estimation of dynamic collateral value against a WHR based on sustainable cultivation, transport and storage.
3. A system and method for generation of comprehensive commodity selling schedule based on commodity quality, risk and market demand.

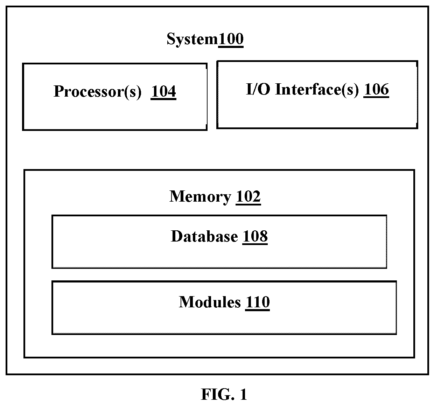

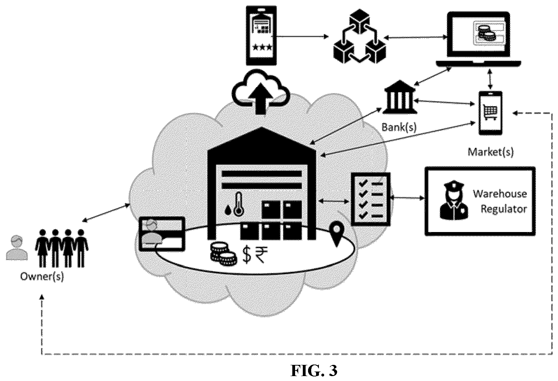

Referring now to the drawings, and more particularly to FIGS. 1 through 3, where similar reference characters denote corresponding features consistently throughout the figures, there are shown preferred embodiments and these embodiments are described in the context of the following exemplary system and/or method.

FIG. 1 illustrates an exemplary system for creating non-fungible token based dynamic decentralized network for warehouse commodity management, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus or a similar mechanism 110. The system 100, with one or more hardware processors present across the physically distributed components, is configured to execute functions of one or more functional blocks or components (servers) of the system 100. In an embodiment, the servers may be used to process requests and send responses, to execute an algorithm for decision support, machine learning, decentralized consensus, NFT creation, data normalization, encryption algorithms, compliance algorithms, optimization algorithms, and/or the like. The algorithm for decision support is used for advising farmers on optimal selling strategies based on commodity quality, risk, and market demand. The algorithm for machine learning are used for demand prediction, risk assessment models, optimization algorithms

Referring to the components of system 100, in an embodiment, the I/O interface(s) 106 may include a variety of software and hardware interfaces, for example, a web interface, a graphical user interface, and the like. The graphical user interface is used for providing stakeholders with a user-friendly interface for system interaction. The graphical user interface includes a web-based UI or mobile UI, data visualization tools, interactive dashboards, eCommerce platform, service or website to enable the NFT transaction and the commodity transaction. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface (s) 106 can include one or more ports for connecting to a number of external devices or to another server such as a digital warehouse asset server or devices. The external devices can include a blockchain Infrastructure to establish a decentralized and secure ledger for managing NFTs, warehouse transactions, and collateral valuation for smart contracts, decentralized consensus algorithm, distributed ledger technology, hardware infrastructure for supporting physical elements of monitoring sub-system and blockchain nodes such as IoT devices, servers, networking hardware, edge computing devices, a data integration sub-system for integrating diverse datasets such as market prices, commodity quality metrics, and sustainability indices including Extract, Transform, Load (ETL) processes, data normalization algorithms, API integrations, security protocols for ensuring security and integrity of data, transactions, and system components including encryption algorithms, secure key management, and multi-factor authentication, non-Invasive monitoring infrastructure for monitoring warehouse conditions without invasive procedures including IoT sensors (e.g., temperature, humidity, etc.), drone, rovers, monitoring modules, connectivity hardware.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computer, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110 distributed across each of the distributed components (servers). The plurality of modules 110 include programs or coded instructions that supplement applications or functions performed by the components of system 100 for executing different steps involved in the process, being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules such as a regulatory compliance sub-module (not shown) for ensuring adherence to relevant regulations in agricultural commodity transactions using compliance algorithms, data anonymization protocols, and audit trail functionalities.

Further, the memory 102 may comprise information pertaining to input(s)/output(s) of each step performed by the processor(s) 104 of the system100 and methods of the present disclosure. Further, the memory 102 includes a database 108, which can be a distributed storage for each of the components such as servers. The database (or repository) 108 may include one or more models and data that is processed, received, or generated as a result of the execution of the one or more models and the plurality of modules in the module(s) 110. The one or more models may include one or more machine learning models such as regression models for dynamically estimating collateral value against warehouse receipts, one or more generative AI models to generate a comprehensive commodity selling schedule and sell summary report, risk assessment models, predictive models, forecasting models, and/or the like.

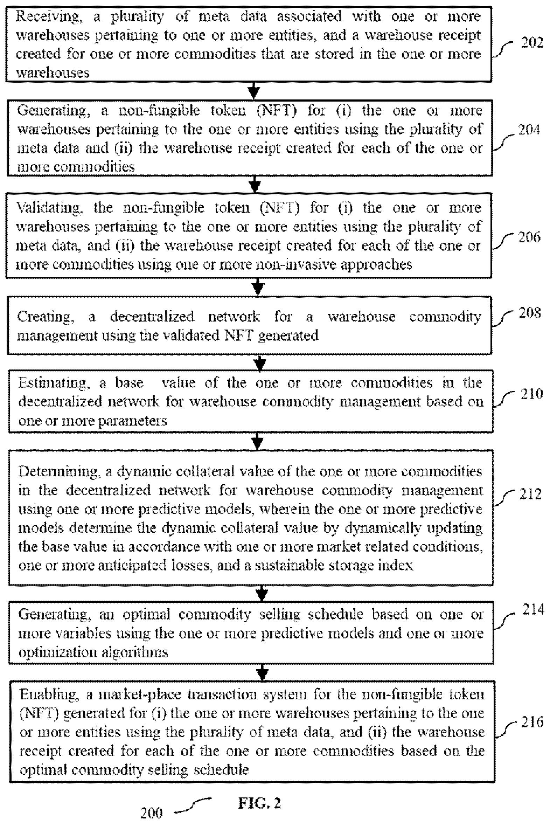

Although the database 108 is shown internal to the system 100, it will be noted that, in alternate embodiments, the database 108 can also be implemented external to the system 100, and communicatively coupled to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS) or any non-relational database such as NoSQL or document databases. Functions of the components of the system 100 are now explained with reference to architecture as depicted in steps in flow diagrams in FIG. 2.

FIG. 2, with reference to FIG. 1, depicts an exemplary flow diagram illustrating a method for creating non-fungible token based dynamic decentralized network for warehouse commodity management, using the system 100 of FIG. 1, in accordance with some embodiments of the present disclosure. Referring to FIG. 1, in an embodiment, the system(s) 100 comprises one or more data storage devices or the memory 102 operatively coupled to the one or more hardware processors 104 and is configured to store instructions for execution of steps of the method by the one or more processors 104. The steps of the method 200 of the present disclosure will now be explained with reference to components of the system 100 of FIG. 1, the flow diagram as depicted in FIG. 2, and one or more examples. Although steps of the method 200 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

Referring to FIG. 2, at step 202 of the present disclosure, one or more hardware processors 104 are configured to receive a plurality of meta data associated with one or more warehouses pertaining to one or more entities, and a warehouse receipt created for one or more commodities that are stored in the one or more warehouses. In an embodiment, the plurality of meta data may comprise but are not limited to name, geotagged boundary, area, sensory modules along with their make present for monitoring, and/or the like. The one or more entities include a farmer, farmer producer organization (FPO's), individuals, and entities owning warehouses that are willing to rent a warehouse. The one or more entities can register their warehouses by providing basic details such as geotagged boundary of the warehouse, information about monitoring infrastructure such as sensors and other modules, and/or the like.

The warehouse receipt (WHR) is a type of documentation used in the futures markets. It guarantees quantity and quality of a particular commodity being stored within an approved facility or warehouse. This commodity acts as a security or collateral. Currently it is available only for a given or selected set of commodities. Hence, WHR acts as a proof, in verifying that (a) the commodity is physically present in the warehouse. (b) necessary requirements or compliances have been met, (c) proper documentation has been verified, (d) commodities has met specific quality standards, (e) commodities can be traded as a futures contract, and available for transfer to a buyer, (f) warehouse where commodity is stored, is in a secured location and is already approved by commodity exchange, and (g) WH provides inventory management.

WHR can be manual or paper based WHR. The paper based warehouse receipt system is cumbersome, costly and inefficient. The paper based WHR must be accounted for at all times and stored for a period of several years after cancellation. The paper based WHR have traditionally been used by firms as sources of collateral for loans from banking organizations against grain transactions. Grain firms or trading entities would deposit paper receipts representing grain in store at state or a licensed warehouses with banks to cover financing activities. Banks would then hold the paper based WHR as collateral against the transaction. As the industry moves to a paperless environment, the use of the paper based WHRs is being transitioned to electronic forms. Digital warehouse receipts (DWRs) are simply computer records of all of the information which is required to appear on a paper based warehouse receipt. DWRs are authorized by law and represent title documents which make them legally equivalent in every way to the paper based warehouse receipts and follow same business and regulatory rules. They could be used for instant ownership transfers between warehouses, processors, one or more plants such as ethanol plants and end users or use as a collateral at lending institutions and boards of trade.

Further, at step 204 of the present disclosure, one or more hardware processors 104 are configured to generate a non-fungible token (NFT) for (i) the one or more warehouses pertaining to the one or more entities using the plurality of meta data and (ii) the warehouse receipt created for each of the one or more commodities. The NFT of the one or more warehouse as a physical asset is generated using the plurality of meta data such as name, geotagged boundary, area, sensory modules along with their make present for monitoring will be associated with the NFT. These NFTs are created in a distributed ledger based blockchain network where smart contract for each NFT includes the plurality of meta data and other details associated with terms of usage, thresholds, if any, conditions, and/or the like. Further, a product asset metadata associated with each of the physical warehouse produce or product (i.e., asset from the selected warehouse) is sourced and recorded. The plurality of metadata is used by the digital warehouse asset server to create a digital asset of each type of the physical warehouse asset, and then used by a NFT Digital Exchange server during creation of a plurality of Non-Fungible Tokens (NFTs) associated with the plurality of digital warehouse assets.

In an embodiment, the warehouse and warehouse receipts are onboarded as NFTs. FIG. 4 provides an overview of onboarding a warehouse as a non-fungible token (NFT) for creating non-fungible token based dynamic decentralized network for warehouse commodity management, in accordance with some embodiments of the present disclosure. Since NFT's have the uniqueness that they cannot be exchanged with other tokens, they can be used as a means of safely guaranteeing the uniqueness of specific assets/products. NFTs of the warehouse allows for the unique and authentic ownership tracking and regulatory compliances of a warehouse. This speeds up the process of onboarding of the warehouse to warehouse network. NFTs of WHR allows for reliable and authentic ownership tracking, removal of frauds/biases as all the transaction becomes visible to everybody on the platform. It removes necessity for paper based WHR storage, filing, safeguarding, tracking used and unused and physically destroying unused WHRs, as well as costs of overnight delivery of warehouse receipts.

Through the use of NFT based WHR, lenders can eliminate the need to designate a local bank to handle warehouse receipts. The web-based system enables loans to be processed quickly and eliminates the safeguarding of paper receipts. The warehouse receipt converted into an NFT would act as ownership for a commodity in storage at the exchange-approved warehouse, bringing a transparent and easy way to manage the WHR and associated commodities. Hence, the entity selling their inventory write a futures contract to sell at a specified or strike price. For precious metals, warehouse receipts may also be referred to as vault receipts. Sometimes, instead of the physical delivery of the actual commodities backing a contract, WHR can be used to settle futures contracts. Hence linking it with the virtual currency or NFTs can help bring sustainable, faster and efficiency in the overall operational process. Futures exchanges are used by buyers and sellers to hedge-or protect themselves from-the price volatility of all types of commodities. In some cases, traders may use the futures market to speculate and profit from arbitrage opportunities. Having them in the form of NFTs can help them bring ease of transaction and at a global level for trading or transfer. Grain warehouses can use NFT based DWR to instantly transfer the ownership of grain-to-grain processors, feed lots, milling operations, and ethanol plants when prepayment is used by the buyer. Storage and delivery requirement specifications may vary from futures exchange to exchanges, hence getting a consolidated view is difficult. For example, at Chicago Mercantile Exchange (CME), exchange-approved warehouses are the only entities and locations that can deliver against a futures contract. Making it part of a NFT traded exchange helps highlight these requirements as part of the smart contract template for the given exchange. NFT based Digital warehouse receipts (DWRs) can not only simplify the computer-based record keeping of all of the information which is required to appear on a paper warehouse receipt but also makes it tradeable, transferable and trackable in a virtual marketplace. Paper based WHR are prone to wear and tear, which can easily be prevented by NFT based WHR. The paper based WHRs must be physically transferred between the warehouse, grain owners and lien holders to assure control and protection offered by possession. Hence, NFTs based WHRs can reduce the risk of losing, stealing, forging of the paper based WHRs. DWRs are authorized by law and represent title documents which make them legally equivalent in every way to paper based WHRs. It is important to note that the same business and regulatory rules that apply to the use of paper based WHRs, also apply to electronic warehouse receipts. But linking this with NFT brings power provenance and transparent. DWRs are widely accepted by banks and lending institutions as well as law and state regulatory agencies. DWRs are most efficient way to securely hold grain positions in today's market. NFT based DWR establishes globally uniquely identifiable ownership for the DWRs and to track any change in ownership. Users achieve instant control of all their NFE based DWRs without any concern of loss of it.

At step 206 of the present disclosure, one or more hardware processors 104 are configured to validate the non-fungible token (NFT) for (i) the one or more warehouses pertaining to the one or more entities using the plurality of meta data, and (ii) the warehouse receipt created for each of the one or more commodities using one or more non-invasive approaches. The method of the present disclosure validates information such as presence of physical warehouse, quality of the sensory infrastructure available with the warehouse and other relevant regulatory checks. All these parameters are monitored using the one or more non-invasive approaches such as but not limited to, satellite and drone based remote-sensing, digital CCTV camera based computer vision analytics, geographical sensors, electronic or Radio Frequency identifier (RFID), and needed for validating the NFT of the one or more warehouses. Integration of non-invasive monitoring mechanisms using sensors and modules ensures transparent monitoring of warehouse conditions. In an embodiment, a ranking for the one or more warehouse is determined based on (i) a feedback received from the one or more entities, and (ii) a plurality of data related to continuous commodity and environmental monitoring obtained from the one or more warehouses. This means that a warehouse rating is created and updated periodically based on the real-time values of the metadata such as not limited to average daily or monthly or periodic volume of arrival and delivery of commodities, revenue in currency terms, total no. of farmers using the warehouse at least once in a year, average percentage commodity wastage, etc. This rating helps in creating a national or state ranking of the one or more warehouses. The parameters involved also include a feedback received by various stakeholders in a warehouse transaction. All these NFTed warehouses would be visible to all the stakeholders such as farmers, FPOs, banks, NBFCs, lenders, government authorities etc. Commodity owners can use any of these warehouses for storage and warehouse receipt can be issued against the same. Blockchain technology enhances transparency and trust by recording and verifying each transaction, involving stakeholders in a secure and auditable process.

At step 208 of the present disclosure, the one or more hardware processors 104 are configured to create a decentralized network for a warehouse commodity management using the validated NFT generated. Implementation of a decentralized network leveraging NFTs for warehouses and warehouse receipts expands accessibility to various stakeholders, including individual farmers, FPOs, and entities owning warehouses. In other words, generation of NFTs for the one or more warehouses and the warehouse receipt helps to create the decentralized network which enables equal opportunity for participation of various stakeholders such as all the farmers and Farmer Producer Organization (FPOs) while ensuring relevant quality checks and regulatory compliance are met. NFTs serve as verifiable assets, allowing commodity owners to use a wider range of warehouses beyond traditional centralized, approved ones. WHR NFTs can be purchased instantly and warehouses can centralize purchasing , issuance, and monitoring of warehouse receipts issued from all company locations. Furthermore, warehouses can view a history of every WHR NFT issued at any time.

At step 210 of the present disclosure, the one or more hardware processors 104 are configured to estimate a base value of the one or more commodities in the decentralized network for warehouse commodity management based on one or more parameters. The one or more parameters for estimating the base value of the one or more commodities comprise at least one of (i) information associated with an actual yield of the one or more commodities, (ii) grade of the one or more commodities, (iii) real time market price trends associated with the one or more commodities, (iv) the one or more anticipated losses, (v) a sustainable cultivation index, and (vi) a sustainable transport index. The approach for base value estimation incorporates multiple parameters to provide an initial valuation for commodities stored in warehouses when those NFTed commodities are arrived at warehouses. Sustainability indices, reflecting environmentally conscious cultivation and transportation practices, are factored in alongside assessments of quality and quantity. Sustainability contributes to the overall valuation, emphasizing responsible agricultural and logistical practices. Quality and quantity parameters provide granular insights into intrinsic worth of the commodities, with considerations for factors such as grade, volume, and condition upon arrival. This holistic assessment ensures a comprehensive base value that serves as the foundation for collateral valuation against warehouse receipts. **In** other words, data on actual yield of the commodity, current market price of the commodity along with the sustainability indices, reflecting environmentally conscious cultivation and transportation practices are factored in alongside assessments of quality and quantity. **In** an embodiment, the base value of a commodity is provided as an expression shown in equation (1) below:

$$Base\ value\ of\ the\ commodity\ CV_0 = \ f\ (Y_a, Q_a, P_a, SCI, STI)\ (1)$$

Here, $CV_0$ represents base value of the commodity during commodity deposit in warehouse, $Y_a$ represents the actual yield or weight or quantity of the commodity which can be estimated using remote sensing techniques or actual quantity can be directly measured using weighing machines, $Q_a$ represents the grade or quality of the commodity which can be determined using expert visual assessment or computer vision techniques by comparing the commodity with standard grades of the same commodity, $P_a$ represents average market price of the commodity which is estimated as average price of the commodity during last 5 years and same timeframe, *SCI* represents the sustainable cultivation index, and *STI* represents sustainable transport index.

In an embodiment, the sustainable cultivation index is related to sustainable or regenerative practices followed on the field while cultivating the commodity. Commodity or crop cultivation involves many practices throughout the season. Compliance with the optimal regenerative practices for the commodity and region. *SCI* is estimated as shown in is provided as an expression shown in equation (2) below:

$$SCI = f(actual\ practices, regenerative\ practices)\ (2)$$

Comparison between these datapoints helps in generating a compliance score between 0 to 100 with 100 being fully compliant and 0 being fully non-compliant. The sustainable transport index is related to environmental emissions during transport of the commodity to the warehouse. *STI* assessment is done based on carbon emissions using energy efficiency and eco-friendly transportation methods and includes information about mode of transport, distance travelled and associated environmental impact. Addition of *SCI* and *STI* in valuation, emphasizes responsible agricultural and logistical practices. Quality and quantity parameters provide granular insights into intrinsic worth of the commodities, with considerations for factors such as grade, volume, and condition upon arrival. This holistic assessment ensures a comprehensive base value that serves as the foundation for collateral valuation against warehouse receipts.

Further, at step 212 of the present disclosure, the one or more hardware processors 104 are configured to determine a dynamic collateral value of the one or more commodities in the decentralized network for warehouse commodity management using one or more predictive models. The one or more predictive models determine the dynamic collateral value by dynamically updating the base value in accordance with one or more market related conditions, one or more anticipated losses, and a sustainable storage index.

**In** an embodiment, base price estimation begins by incorporating sustainability indices, quality, and quantity parameters, providing an initial valuation for commodities. Sustainability indices takes into account the impact of sustainable cultivation and sustainable transport. Moreover, Anticipated market conditions and losses are factored in dynamically to adjust this base value, offering a more accurate representation. To enhance accuracy, an algorithm dynamically adjusts the base value by considering anticipated market conditions and potential losses. This correction is crucial as it accounts for fluctuations in market prices and foresees qualitative and quantitative losses during the storage period. The algorithm incorporates the one or more predictive models that factor in expected market trends and potential risks, offering a more nuanced and adaptable valuation. By preemptively adjusting the base value, a forward-looking perspective is provided, enabling a more informed decision-making process for loans against warehouse receipts.

In an embodiment, the dynamic collateral value is provided as an expression shown in equation (3) below:

$$CV_i = f(CV_o, CV_{sa}, CV_t)\ (3)$$

Here, $CV_i$ represents the dynamic collateral value calculated at $i^{th}$ time instance, $CV_o$ represents initial commodity value at the time of the commodity deposit in warehouse, $CV_t$ represents impact on the commodity value due to anticipated market prices. This value can be negative. This is estimated based on time-series based forecast model which would be trained on historical data on various commodities, prices at various time instance. $CV_{sa}$ represents impact on the commodity during the storage. This takes into account the sustainable storage, anticipated quality and quantitative losses, anticipated enhancements and is represented as an expression shown in equation (4) below as:

$$CV_{sa} = f(AQ_L, AQ_N, SSI)\ (4)$$

Here, $AQ_L, AQ_N$ represent anticipated qualitative, quantitative losses or enhancements calculated based on the ML model trained on the historical data of various commodities, environmental conditions and associated quality/quantity change over time. SSI represents sustainable storage index which is estimated based on a comparison with optimal energy utilization with actual energy consumed with use of renewable sources.

In an embodiment, the dynamic collateral value of the one or more commodities ensures resilience with evolving market dynamics and storage conditions. As commodities are stored, continuous monitoring enables the system to provide a temporal view, updating the base value in response to real-time data on market prices, qualitative and quantitative losses or enhancements. This ensures a dynamic and adaptive valuation mechanism, enhancing precision in estimating collateral values for loans against warehouse receipts. Continuous monitoring plays a pivotal role in the algorithm's effectiveness. Real-time data on market prices, qualitative and quantitative losses, and warehouse conditions are integrated into the system, facilitating frequent updates to the base value. This continuous feedback loop ensures that the valuation remains dynamic and responsive to changing circumstances. The temporal view of the base value reflects its evolution over time, allowing stakeholders to track fluctuations, make data-driven decisions, and assess the collateral's current worth against the warehouse receipts. This iterative and adaptive process ensures the system's resilience in the face of evolving market dynamics and storage conditions.

**In** the present disclosure, sustainability indices are incorporated as crucial parameters in collateral valuation, aligning with modern agricultural practices and addressing environmental concerns. By factoring in sustainability, the system of the present disclosure encourages and rewards environmentally conscious cultivation and transport practices, contributing to the overall sustainability of the agricultural supply chain.

At step 214 of the present disclosure, the one or more hardware processors 104 are configured to generate an optimal commodity selling schedule based on one or more real time variables using the one or more predictive models and one or more optimization algorithms. The one or more real time variables for generating the optimal commodity selling schedule comprise at least one of (i) an anticipated market price trend associated with the one or more commodities, (ii) the one or more anticipated losses, (iii) information associated with temporal arrival of the one or more commodities into market, and (iv) one or more user preferences.

The optimal commodity selling schedule is a comprehensive table of periodic quantity to be sold and potential price range, including till the entire deposited commodity quantity is sold before the end of agreed term or maximum storage duration recommended. **In** an embodiment, a dynamic decision support system is employed that utilizes a dynamic multifaceted algorithmic approach that uses predictive modeling and optimization algorithms to advise farmers on the optimal timing and quantity based selling strategies for their commodities. By integrating considerations such as commodity quality, risk, market conditions, temporal commodity arrival into the market, warehouse status, and farmer-specific needs, the dynamic decision support system utilizes sophisticated predictive models and optimization algorithms. These models assess the quality attributes of stored commodities, analyses market dynamics and risks, evaluate the status of NFTed warehouses, and account for individual farmer preferences and financial goals. The dynamic decision support system assesses historical data on commodity quality, market conditions, and warehouse status to forecast future trends by leveraging machine learning algorithms. Advanced optimization algorithms such as genetic algorithms or simulated annealing, are applied to determine an individualized selling strategy for each farmer. These algorithms consider a multitude of factors, including risk tolerance, financial goals, and the current state of the commodities, resulting in a dynamic decision-making process that adapts to evolving market dynamics. By continuously monitoring these parameters and optimizing in real-time, personalized recommendations on when and how much of their commodities farmers should sell are provided.

**In** an embodiment, the optimal selling schedule is provided as an expression shown in equation (5) below:

$$OSS_i = f(AQ_L, AQ_N, AMP, CA_t, FP) \ (5)$$

Here, $OSS_i$ represents the optimal selling schedule.

$AQ_L$ represents the anticipated qualitative losses estimated based commodity quality score. Here the commodity quality score is estimated based on ML or statistical or rule based model trained on the historical data on commodity quality and various environmental parameters.

$AQ_N$, represents the anticipated quantitative losses estimated based on the commodity quality and change in weight based on the moisture changes during the storage period. $AMP$ represents anticipated market price trend. This is estimated based on time-series based forecast model which would be trained on historical data on various commodities, prices at various time instance.

$CA_t$ represents temporal commodity arrival into the market. This influences supply and impact the market prices.

FP represents farmer preferences. In the presence disclosure, the dynamic multifaceted algorithmic approach is customized based on individual farmer preferences.

In an embodiment, the optimal commodity selling schedule is dynamically updated. This mean that $OSS_i$ is updated dynamically over time using the actual available data on $Q_L$, $AQ_N$, $AMP$, and $CA_t$. Continuous monitoring and real-time data integration enable the dynamic decision support system to provide personalized recommendations, optimizing farmers' selling strategies and enhancing profitability. As market conditions, commodity quality, and warehouse status evolve, the dynamic decision support system dynamically updates its predictive models. Machine learning models, such as recurrent neural networks, analyze incoming data streams to provide up-to-the-minute insights. The optimization algorithms continuously adjust based on the latest information, ensuring that the recommended selling strategies remain finely tuned. The dynamic decision support system incorporates a feedback loop that allows farmers to provide real-world outcomes, enabling the algorithms to learn and adapt further. This iterative process ensures a highly responsive and adaptive system that aligns closely with the ever-changing dynamics of the agricultural market.

Further, at step 216 of the present disclosure, the one or more hardware processors 100 are configured to enable a market-place transaction system for the non-fungible token (NFT) generated for (i) the one or more warehouses pertaining to the one or more entities using the plurality of meta data, and (ii) the warehouse receipt created for each of the one or more commodities based on the optimal commodity selling schedule.

In an embodiment, the dynamic collateral value of the one or more commodities enables the system 100 of the present disclosure to have a control and view of the stored commodity and how it's quantity and quality are improving or degrading. Primary beneficiaries include (a) farmer who can know if there is a risk and any action to be taken, (b) warehouse manager who can take timely action and take insurance, (c) insurance company which can define a new product, and thresholds or events for which the payout would be triggered, (d) bank which knows the risk associated to the loan given against WHR NFT and what action to take or recommend to farmer or WH owner or future buyer/trader, (e) trader/buyer who can optimize the commodity loss and improve the margin, (f) transporter who would know potentially where the transportation may be required, (g) processor for processing who would know where to go for the least cost and appropriate quality of the commodity, and (h) consumer who would know lifecycle of the commodity procured by them for direct or indirect end consumption.

In an embodiment, primary beneficiaries of optimal selling schedule include (a) farmer who can know when to sell and when to hold, (b) warehouse manager who would know potential occupancy of the WH and maximize the occupancy without losses, (c) insurance company which would define the pricing for the insurance product, (d) bank which would determine the flexible loan products to give discount or charge additional interest, (e) trader/buyer who can optimize the commodity loss and improve the margin, (f) transporter who would know potentially where the transportation may be required, (g) processor for processing who would know where to go for the least cost and appropriate quality of the commodity, and (h) consumer who would know lifecycle of the commodity procured by them for direct or indirect end consumption

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the embodiments or if they include equivalent elements with insubstantial differences from the literal language of the embodiments described herein.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated herein by the following claims.

**Claims**

1. A processor implemented method (200), comprising:

   receiving (202), via one or more hardware processors, a plurality of meta data associated with one or more warehouses pertaining to one or more entities, and a warehouse receipt created for one or more commodities that are stored in the one or more warehouses;
   generating (204), via the one or more hardware processors, a non-fungible token (NFT) for (i) the one or more warehouses pertaining to the one or more entities using the plurality of meta data and (ii) the warehouse receipt created for each of the one or more commodities;
   validating (206), via the one or more hardware processors, the non-fungible token (NFT) for (i) the one or more warehouses pertaining to the one or more entities using the plurality of meta data, and (ii) the warehouse receipt created for each of the one or more commodities using one or more non-invasive approaches;
   creating (208), via the one or more hardware processors, a decentralized network for a warehouse commodity management using the validated NFT generated;
   estimating (210), via the one or more hardware processors, a base value of the one or more commodities in the decentralized network for warehouse commodity management based on one or more parameters;
   determining (212), via the one or more hardware processors, a dynamic collateral value of the one or more commodities in the decentralized network for warehouse commodity management using one or more predictive models, wherein the one or more predictive models determine the dynamic collateral value by dynamically updating the base value in accordance with one or more market related conditions, one or more anticipated losses, and a sustainable storage index;
   generating (214), via the one or more hardware processors, an optimal commodity selling schedule based on one or more variables using the one or more predictive models and one or more optimization algorithms; and
   enabling (216), via the one or more hardware processors, a market-place transaction system for the non-fungible token (NFT) generated for (i) the one or more warehouses pertaining to the one or more entities using the plurality of meta data, and (ii) the warehouse receipt created for each of the one or more commodities based on the optimal commodity selling schedule.

2. The processor implemented method as claimed in claim 1, further comprising:
   determining a ranking for the one or more warehouse based on (i) a feedback received from the one or more entities, and (ii) a plurality of data related to continuous commodity and environmental monitoring obtained from the one or more warehouses.

3. The processor implemented method as claimed in claim 1, wherein the one or more parameters for estimating the base value of the one or more commodities comprise at least one of (i) information associated with an actual yield of the one or more commodities, (ii) grade of the one or more commodities, (iii) real time market price trends associated with the one or more commodities, (iv) the one or more anticipated losses, (v) a sustainable cultivation index, and (vi) a sustainable transport index.

4. The processor implemented method as claimed in claim 1, wherein the dynamic collateral value of the one or more commodities ensures resilience with evolving market dynamics and storage conditions.

5. The processor implemented method as claimed in claim 1, wherein the one or more real time variables for generating the optimal commodity selling schedule comprise at least one of (i) an anticipated market price trend associated with the one or more commodities, (ii) the one or more anticipated losses, (iii) information associated with temporal arrival of the one or more commodities into market, and (iv) one or more user preferences.

6. The processor implemented method as claimed in claim 1, wherein the optimal commodity selling schedule is dynamically updated.

7. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive a plurality of meta data associated with one or more warehouses pertaining to one or more entities, and a warehouse receipt created for one or more commodities that are stored in the one or more warehouses;
generate a non-fungible token (NFT) for (i) the one or more warehouses pertaining to the one or more entities using the plurality of meta data and (ii) the warehouse receipt created for each of the one or more commodities;
validate the non-fungible token (NFT) for (i) the one or more warehouses pertaining to the one or more entities using the plurality of meta data, and (ii) the warehouse receipt created for each of the one or more commodities using one or more non-invasive approaches;
create a decentralized network for a warehouse commodity management using the validated NFT generated;
estimate a base value of the one or more commodities in the decentralized network for warehouse commodity management based on one or more parameters;
determine a dynamic collateral value of the one or more commodities in the decentralized network for warehouse commodity management using one or more predictive models, wherein the one or more predictive models determine the dynamic collateral value by dynamically updating the base value in accordance with one or more market related conditions, one or more anticipated losses, and a sustainable storage index;
generate an optimal commodity selling schedule based on one or more real time variables using the one or more predictive models and one or more optimization algorithms; and
enable a market-place transaction system for the non-fungible token (NFT) generated for (i) the one or more warehouses pertaining to the one or more entities using the plurality of meta data, and (ii) the warehouse receipt created for each of the one or more commodities based on the optimal commodity selling schedule.

8. The system as claimed in claim 7, further comprising:
determining a ranking for the one or more warehouse based on (i) a feedback received from the one or more entities, and (ii) a plurality of data related to continuous commodity and environmental monitoring obtained from the one or more warehouses.

9. The system as claimed in claim 7, wherein the one or more parameters for estimating the base value of the one or more commodities comprise at least one of (i) information associated with an actual yield of the one or more commodities, (ii) grade of the one or more commodities, (iii) real time market price trends associated with the one or more commodities, (iv) the one or more anticipated losses, (v) a sustainable cultivation index, and (vi) a sustainable transport index.

10. The system as claimed in claim 7, wherein the dynamic collateral value of the one or more commodities ensures resilience with evolving market dynamics and storage conditions.

11. The system as claimed in claim 7, wherein the one or more real time variables for generating the optimal commodity selling schedule comprise at least one of (i) an anticipated market price trend associated with the one or more commodities, (ii) the one or more anticipated losses, (iii) information associated with temporal arrival of the one or more commodities into market, and (iv) one or more user preferences.

12. The system as claimed in claim 7, wherein the optimal commodity selling schedule is dynamically updated.

13. One or more non-transitory machine-readable information storage mediums comprising one or more instructions which when executed by one or more hardware processors cause:

receiving a plurality of meta data associated with one or more warehouses pertaining to one or more entities, and a warehouse receipt created for one or more commodities that are stored in the one or more warehouses;
generating a non-fungible token (NFT) for (i) the one or more warehouses pertaining to the one or more entities using the plurality of meta data and (ii) the warehouse receipt created for each of the one or more commodities;
validating the non-fungible token (NFT) for (i) the one or more warehouses pertaining to the one or more entities using the plurality of meta data, and (ii) the warehouse receipt created for each of the one or more commodities using one or more non-invasive approaches;

creating a decentralized network for a warehouse commodity management using the validated NFT generated;

estimating a base value of the one or more commodities in the decentralized network for warehouse commodity management based on one or more parameters;

determining a dynamic collateral value of the one or more commodities in the decentralized network for warehouse commodity management using one or more predictive models, wherein the one or more predictive models determine the dynamic collateral value by dynamically updating the base value in accordance with one or more market related conditions, one or more anticipated losses, and a sustainable storage index;

generating an optimal commodity selling schedule based on one or more variables using the one or more predictive models and one or more optimization algorithms; and

enabling a market-place transaction system for the non-fungible token (NFT) generated for (i) the one or more warehouses pertaining to the one or more entities using the plurality of meta data, and (ii) the warehouse receipt created for each of the one or more commodities based on the optimal commodity selling schedule.

14. The one or more non-transitory machine-readable information storage mediums as claimed in claim 13, wherein the one or more instructions which when executed by the one or more hardware processors further cause:
determining a ranking for the one or more warehouse based on (i) a feedback received from the one or more entities, and (ii) a plurality of data related to continuous commodity and environmental monitoring obtained from the one or more warehouses.

15. The one or more non-transitory machine-readable information storage mediums as claimed in claim 13, wherein the one or more parameters for estimating the base value of the one or more commodities comprise at least one of (i) information associated with an actual yield of the one or more commodities, (ii) grade of the one or more commodities, (iii) real time market price trends associated with the one or more commodities, (iv) the one or more anticipated losses, (v) a sustainable cultivation index, and (vi) a sustainable transport index, and wherein the dynamic collateral value of the one or more commodities ensures resilience with evolving market dynamics and storage conditions, and wherein the one or more real time variables for generating the optimal commodity selling schedule comprise at least one of (i) an anticipated market price trend associated with the one or more commodities, (ii) the one or more anticipated losses, (iii) information associated with temporal arrival of the one or more commodities into market, and (iv) one or more user preferences, and wherein the optimal commodity selling schedule is dynamically updated.

System**100**

Processor(s) **104**

I/O Interface(s) **106**

Memory **102**

Database **108**

Modules **110**

**FIG. 1**

Receiving, a plurality of meta data associated with one or more warehouses pertaining to one or more entities, and a warehouse receipt created for one or more commodities that are stored in the one or more warehouses — 202

Generating, a non-fungible token (NFT) for (i) the one or more warehouses pertaining to the one or more entities using the plurality of meta data and (ii) the warehouse receipt created for each of the one or more commodities — 204

Validating, the non-fungible token (NFT) for (i) the one or more warehouses pertaining to the one or more entities using the plurality of meta data, and (ii) the warehouse receipt created for each of the one or more commodities using one or more non-invasive approaches — 206

Creating, a decentralized network for a warehouse commodity management using the validated NFT generated — 208

Estimating, a base value of the one or more commodities in the decentralized network for warehouse commodity management based on one or more parameters — 210

Determining, a dynamic collateral value of the one or more commodities in the decentralized network for warehouse commodity management using one or more predictive models, wherein the one or more predictive models determine the dynamic collateral value by dynamically updating the base value in accordance with one or more market related conditions, one or more anticipated losses, and a sustainable storage index — 212

Generating, an optimal commodity selling schedule based on one or more variables using the one or more predictive models and one or more optimization algorithms — 214

Enabling, a market-place transaction system for the non-fungible token (NFT) generated for (i) the one or more warehouses pertaining to the one or more entities using the plurality of meta data, and (ii) the warehouse receipt created for each of the one or more commodities based on the optimal commodity selling schedule — 216

200 ⟋ **FIG. 2**

**FIG. 3**

Europäisches
Patentamt

European
Patent Office

Office européen
des brevets

## EUROPEAN SEARCH REPORT

**Application Number**

EP 25 16 4388

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Lf Decentralized Trust: "2021-07-28 Warehouse Receipt Finance: IoTs to Strengthen Data backing Warehouse Receipt Lending", <br><br>, <br> 20 March 2024 (2024-03-20), XP093277227, Retrieved from the Internet: URL:https://www.youtube.com/watch?v=UDdI0_FbdAY [retrieved on 2025-05-14] * the whole document * | 1-15 | INV. <br> G06Q30/0201 <br> G06Q40/06 <br> H04L9/00 |
| X | CN 113 393 180 A (BEIJING JINGDONG ZHENSHI INFORMATION TECH CO LTD) 14 September 2021 (2021-09-14) | 1,7,13 | |
| A | * page 1 - page 3 * <br> * page 8 * <br> * page 10 * <br> * page 12 - page 15 * | 2-6, 8-12,14, 15 | |

**TECHNICAL FIELDS SEARCHED (IPC)**

G06Q
H04L

The present search report has been drawn up for all claims

| Place of search | Date of completion of the search | Examiner |
|---|---|---|
| Munich | 14 May 2025 | Bharucha, Zubin |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EP 4 621 692 A1

**ANNEX TO THE EUROPEAN SEARCH REPORT
ON EUROPEAN PATENT APPLICATION NO.**

EP 25 16 4388

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2025

| Patent document cited in search report | Publication date | Patent family member(s) | Publication date |
|---|---|---|---|
| CN 113393180 A | 14-09-2021 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421021572